# EUROPÄISCHE PATENTSCHRIFT

(11) **EP 3 704 432 B1**
(45) Veröffentlichungstag und Bekanntmachung des Hinweises auf die Patenterteilung: **07.06.2023**
(21) Anmeldenummer: 18833600.2
(22) Anmeldetag: 07.12.2018
(51) Int. Cl.: F28D 20/00, F24H 9/13

(54) **VERFAHREN UND VORRICHTUNG ZUM BE- UND/ODER ENTLADEN EINES THERMISCHEN ENERGIESPEICHERS**
METHOD AND APPARATUS FOR CHARGING AND/OR DISCHARGING A THERMAL ENERGY STORAGE
APPAREIL POUR LE CHARGEMENT ET LE DÉCHARGEMENT D'UN ACCUMULATEUR THERMIQUE

(30) Priorität: 07.12.2017 DE 102017129184
(43) Veröffentlichungstag der Anmeldung: 09.09.2020
(73) Patentinhaber: Technische Universität Chemnitz, 09111 Chemnitz (DE)
(72) Erfinder: URBANECK, Thorsten, 09125 Chemnitz (DE); FINDEISEN, Fabian, 09126 Chemnitz (DE); PLATZER, Bernd, 09235 Burkhardtsdorf/Neu-Eibenberg (DE); WINKLER, Tim, 04157 Leipzig (DE)
(74) Vertreter: Rumrich, Gabriele
(86) Internationale Anmeldenummer: PCT/DE2018/101000
(87) Internationale Veröffentlichungsnummer: WO 2019/110058

(56) Entgegenhaltungen:
- WO-A1-2016/065418
- DE-A1- 19 704 986
- DE-A1- 19 743 563
- DE-U1- 9 321 446
- DE-U1-202009 000 530
- DE-U1-202010 004 802
- FR-A1- 2 640 029
- US-A- 2 224 741
- US-A- 4 394 966

## Beschreibung

Die Erfindung betrifft ein Verfahren und eine Vorrichtung zum Be- und/oder Entladen eines thermischen Energiespeichers gemäß dem ersten Patentanspruch.

Eine typische Konstruktion für thermische Speicher stellen Druckbehälter dar, welche aufgrund ihrer Konstruktion, Fertigung und Logistik oft eine schlanke Form aufweisen. Die Be- und Entladung solcher Druckbehälter erfolgt in der Regel mittels radialer und linearer Diffusoren, Rohrverteilern und ähnlichen Einrichtungen. Typisch für den konstruktiven Aufbau eines schlanken Speichers ist ein geringer Abstand zwischen Diffusormündung und Speicherseitenwand, wobei diese Anordnung hohe Radialgeschwindigkeiten und eine vertikale Ablenkung des Strahls an der Wand verursacht, was im Wesentlichen zu einer starken Vermischung im Speicher führt.

Aus der Druckschrift DE 43 05 867 A1 ist ein Heißwasserspeicher, insbesondere ein Heißwasserspeicher bei Atmosphärendruck für Fernheizsysteme, bekannt, in dem horizontale Leitvorrichtungen entlang des Diffusorauslasses so ausgebildet sind, dass im Wasservolumen in einem Speichertank die geringst mögliche Verwirbelung auftritt. Zwischen der Heißwasserschicht und der Kaltwasserschicht wird bei Einleitung von heißem und kaltem Wasser mit maximaler Strömungsgeschwindigkeit über die Leitvorrichtung in Form eines Radialdiffusors in dem Tank eine dünne und stabile Übergangsschicht aufrechterhalten. Des Weiteren werden ein Verfahren und eine Einrichtung zur Aufrechterhaltung eines im Wesentlichen konstanten Überdrucks des über der Heißwasserschicht vorhandenen Wasserdampfes zwecks Vermeidung des Eindringens von Sauerstoff offenbart. Dies soll der Vermeidung von Korrosion der Stahloberfläche des Tanks dienen.

In der Druckschrift DE 10 2007 027 570 B3 wird ein Verfahren und System zum Be- und/oder Entladen eines thermischen Energiespeichers mit einem zwischen den Diffusorplatten vorgesehenen Einsatz beschrieben. Der thermische Energiespeicher weist einen Flüssigkeitsbehälter mit wenigstens einem Flüssigkeitszulauf und wenigstens einem Flüssigkeitsablauf auf, wobei der Flüssigkeitszulauf und/oder der Flüssigkeitsablauf wenigstens eine Flüssigkeitsleitung aufweist, die in einen radialen Diffusor mündet, durch welchen Flüssigkeit in den oder aus dem Flüssigkeitsbehälter geleitet wird. Der Diffusor weist einen zentral angeordneten und mit der Flüssigkeitsleitung verbundenen Diffusoranschlussbereich und sich radial von dem Diffusoranschlussbereich erstreckende, voneinander beabstandete Diffusorplatten auf. Zwischen den Diffusorplatten ist wenigstens ein Einsatz vorgesehen, der einen Strömungswiderstand aufweist, der größer als der Strömungswiderstand einer ungestörten Strömung zwischen den beiden Diffusorplatten ist. Der Einsatz ist dabei in Form von einem oder mehreren kreisförmigen Lochelementen oder in Form von mehreren, sich radial zwischen den Diffusorplatten erstreckenden Leitelementen ausgebildet.

Die Druckschrift DE 38 19 317 A1 beschreibt eine Anordnung zur wirbelfreien Einleitung von Speichermedien in Schichtwärmespeicherbehältern. Die Druckschrift bezieht sich auf die im Rahmen der Fernwärmeversorgung, Anfallenergie- sowie Geothermienutzung erforderliche Wärmespeicherung in drucklosen Tankbehälterspeichern nach dem Schichtenspeicherprinzip. Die turbulente Strömung in den Zuleitungen und Einbauten wird mittels einer Anordnung in eine weniger turbulente Ausströmung in den Speicherbehälter umgeformt. Dazu werden am Rand der Diffusoren angeordnete Lochplattenringe verwendet, die den Strömungswiderstand beeinflussen.

In der Druckschrift DE 554 140 A wird eine Einrichtung zur Minderung beziehungsweise gemäß der Druckschrift Unschädlichmachung kinetischer Flüssigkeitsenergie durch Umwandlung in Wärme bei Rohren beschrieben, wobei eine feststehende Leitvorrichtung in Gestalt eines zweikränzigen Rades Anwendung findet. Das in das Gehäuse einströmende Wasser wird durch das zweikränzige Rad in zwei im wesentlichen gleichachsige Teilströme von entgegengesetzter Drehrichtung unterteilt, wobei die benachbarten Wasserströme mit entgegengesetztem Drall aneinander reiben und aneinander gleiten.

Ein Wärmeschichtspeicher ist aus der Druckschrift DE 197 43 563 A1 bekannt. Der Wärmeschichtspeicher ist ein, im Wesentlichen vertikal ausgerichteter Speicherbehälter zum Aufnehmen einer wärmespeichernden Flüssigkeit und mit wenigstens einer Entnahmesteile sowie wenigstens einer Einleitstelle für die Flüssigkeit ausgebildet. Um Durchmischungsverluste zu vermeiden, weist der Speicherbehälter ein Hauptspeichervolumen und ein Nebenspeichervolumen auf. Die Einleitstelle mündet in das Nebenspeichervolumen, das über wenigstens eine Öffnung mit dem Hauptspeichervolumen verbunden ist, die sich im Wesentlichen entlang dem Temperaturgefälle über im Wesentlichen die gesamte Höhe des Wärmeschichtspeichers erstreckt.

Aus der Druckschrift DE 93 21 446 U1 ist ein Kaltwassereinlaufrohr für einen Warmwasserspeicher bekannt. Das Kaltwassereinlaufrohr ist im unteren Bereich des Speicherbehälters angeordnet und weist wenigstens eine in horizontaler Richtung tangential zur Innenseite der Speicherbehälterwandung weisende Ausströmöffnung auf.

Die Druckschrift DE 20 2010 004 802 U1 betrifft einen Schichtspeicher zum Speichern von Flüssigkeiten in thermischen Schichten mit wenigstens einer Behälterwand und einem Wasseranschluss. Dieser genannte Schichtspeicher weist einen komplizierten Aufbau auf. Eine weitere Vorrichtung zum Be- und Entladen von thermischen Speichern ist aus der Druckschrift DE 199 37 985 C1 bekannt. Die Vorrichtung weist drei Abschnitte auf. Der erste Aufschnitt ist der Hauptströmungskanal zur Führung des einzulagernden Fluids. Der zweite Abschnitt dient als Trennstelle und entkoppelt das einzulagernde Fluid von dem umgebenden Speicherwasser. Den dritten Abschnitt bildet die Beruhigungs- und Einströmzone mit der Aufgabe, das Fluid störungsfrei in den Speicher einzuleiten. Der Hauptströmungskanal weist vertikal, idealerweise gleich beabstandet und über den gesamten Umfang des Hauptströmkanals sich erstreckende seitliche Auslässe auf.

Die Druckschrift DE 20 2009 000 530 U1 zeigt einen Schichtenspeicher mit einer Zuführeinrichtung, welche mehrere ausgestellte dreieckige Leitelemente aufweist, um die Zuströmung in eine tangentiale Drallströmung zu überführen. Aus dieser Druckschrift sind eine Vorrichtung nach dem Oberbegriff von Anspruch 1 und ein Verfahren nach dem Oberbegriff von Anspruch 9 bekannt.

Aufgabe der Erfindung ist es, ein Verfahren und eine Vorrichtung zum Be- und/oder Entladen eines thermischen Energiespeichers bereitzustellen, welche einen einfachen konstruktiven Aufbau, die Vermeidung von hohen Radialgeschwindigkeiten und eine Verringerung der Vermischung im Speicher aufweist. Mit der Erfindung soll Warm- oder Heißwasser von Kaltwasser beziehungsweise Kaltwasser von Heiß-/Warmwasser in einem Speicher getrennt werden, wobei eine großräumige Vermischung (Erfassung tiefer liegender Schichte) signifikant reduziert oder weitgehend vermieden wird.

Diese Aufgabe wird mit den kennzeichnenden Merkmalen des ersten und neunten Patentanspruchs gelöst.

Vorteilhafte Ausgestaltungen ergeben sich aus den Unteransprüchen.

Die Erfindung betrifft eine Vorrichtung zum Be- und/oder Entladen eines thermischen Energiespeichers, wobei der thermische Energiespeicher mittels einer Zuführeinrichtung mit mindestens einem Fluid als Speichermedium beladbar ist, wobei die Zuführeinrichtung wenigstens zwei oder mehrere bogenförmig radial nach außen weisende Leitelemente zur Erzeugung einer drallbehafteten Strömung aufweist, die den Strömungsverlauf in radialer Richtung beeinflusst und/oder dass an die Zuführeinrichtung zwei oder mehrere bogenförmig radial nach außen weisende Leitelemente anschließen. In einer möglichen Ausgestaltung weist der Energiespeicher wenigstens eine zusätzliche Anordnung zur Erzeugung einer drallbehafteten Strömung auf derart, dass die Zuführung tangential zu der speicherwand angeordnet ist und den Strömungsverlauf in tangentialer Richtung beeinflusst. Somit können mittels drallbehafteter Strömungen hohe Radialgeschwindigkeiten vermieden und eine Vermischung im Speicher signifikant verringert werden.

Durch die erfindungsgemäße Vorrichtung können auftretende Verwirbelungen in der Nähe der Zuführeinrichtung schneller/intensiver abgebaut werden. Dadurch wird der Impulsabbau des einströmenden Fluids besser realisiert bzw. auf den Nahbereich der Zuführeinrichtung begrenzt.

Vorteilhafter Weise ist die Entladetemperatur des entnommenen Fluids nahezu gleich der Beladetemperatur des Fluids. Das heißt, es sollen die inneren Verluste (Temperaturausgleich durch Mischungsvorgänge) weitgehend reduziert werden.

Der Energiespeicher ist mittels einer innenliegenden, sich koaxial zum Speicher erstreckenden Zuführeinrichtung und/oder einer an der Speicherwand umlaufend oder zumindest bereichsweise ausgebildeten Zuführeinrichtung beladbar.

Zur Erzeugung der drallbehafteten Strömung weist die Zuführeinrichtung und/oder eine Entnahmeeinrichtung einen um einen Drallwinkel zu der Senkrechten der Speicherwand gedrehten Auslass auf. Zudem kann die Zuführeinrichtung einen lokalen Auslass in tangentialer Richtung entlang der Speicherwand und/oder in radialer Richtung in den thermischen Energiespeicher aufweisen, wobei das Fluid entlang der Speicherinnenwand geführt wird.

In einer vorteilhaften Ausgestaltung ist die Zuführeinrichtung in Form eines im Inneren des Energiespeichers angeordneten Radialdiffusors ausgebildet. Der Radialdiffusor weist wenigstens ein Leitelement in Form eines Leitbleches oder einer Leitschaufel auf, wobei das Leitelement gekrümmt oder als Freiform ausgebildet ist und sich nicht zwangsweise parallel zur Hauptströmungsrichtung bereichsweise oder vollständig über den Radialdiffusor erstreckt. Das Leitblech kann starr oder einstellbar ausgebildet sein, wobei mittels des Leitblechs die Strömungsform vorzugsweise einstellbar ist.

Zudem kann die Zuführeinrichtung weitere einstellbare und/oder steuerbare Elemente zur Erzeugung definierter Strömungsformen aufweisen.

Des Weiteren betrifft die Erfindung ein Verfahren zum Be- und/oder Entladen eines thermischen Energiespeichers, wobei der thermische Energiespeicher mittels einer Zuführeinrichtung mit mindestens einem Fluid als Speichermedium beladen wird. Der Strömungsverlauf des durch die Zuführung in den Energiespeicher einströmenden Fluids wird radial und/oder tangential beeinflusst, sodass eine drallbehaftete Strömung und eine vorteilhafte Geschwindigkeitsverteilung mit wenig Vermischung im Fernbereich der Zuführeinrichtung in dem Energiespeicher entstehen, wobei mittels wenigstens zwei oder mehrerer bogenförmig radial nach außen weisender Leitelemente die drallbehaftete Strömung radial erzeugt wird. In einer alternativen Ausgestaltung erfolgt die Zuführung zusätzlich tangential zu der Speicherwand und beeinflusst den Strömungsverlauf in tangentialer Richtung.

Die Beladung von außen erfolgt über den gesamten bzw. einen großen Teil des Speicherumfangs oder nur lokal, d.h. über einem kleinen Bereich des Umfangs. Ein stärkerer Drall bedingt eine unter Umständen höhere Eintrittsgeschwindigkeit des Fluids im Nahbereich der Zuführeinrichtung. Mittels der Drallerzeugung kann ein schneller Impulsabbau im Speicher erfolgen.

Der Energiespeicher wird vorzugsweise mittels einer zentrisch angeordneten Drallströmung, einer von der Speicherwand ins Innere strömenden Drallströmung oder einer Kombination aus beiden Verfahren beladen.

In einer weiteren vorteilhaften Ausgestaltung kann das Fluid in tangentialer Richtung entlang der Speicherwand und/oder in radialer Richtung in den thermischen Energiespeicher einströmen.

Mittels der drallbehafteten Strömung wird von der Zuführung zum Austritt des Fluids in dem thermischen Energiespeicher ein gleichmäßigeres Geschwindigkeitsprofil erzeugt und eine Vermischung mit einem Fluid mit einer anderen Temperatur verringert.

Das Verfahren zeichnet sich dadurch aus, dass mittels der drallbehafteten Strömung des einströmenden Fluids mit einer ersten Temperatur T₁ nur eine geringe Vermischung mit dem in dem Energiespeicher befindlichen Fluid mit einer zweiten Temperatur T₂ erfolgt.

Der Radialdiffusor kann allgemeine Formen aufweisen, wobei er vorzugsweise quadratisch, rund, elliptisch oder als ein Polygonzug ausgebildet ist. Dabei kann die Außenkante des Radialdiffusors zum Beispiel eben oder höhenverstellbar, gewellt oder gezackt sein.

Die Zuleitung des Fluids in Richtung der Zuführeinrichtung erfolgt von oben, unten oder auch beidseitig.

Der Radialdiffusor ist vorzugsweise mittig alleine im Energiespeicher angeordnet, jedoch ist auch eine exzentrische Anordnung denkbar. Des Weiteren ist der Auslass in Form einer Ebene horizontal, vertikal oder schräg angeordnet.

In einer alternativen Ausgestaltung sind mehrere Radialdiffusoren in einer Gruppe nebeneinander oder übereinander angeordnet, wobei diese direkt aneinandergrenzend oder in einem Abstand zueinander angeordnet sind. Auch unterschiedlich ausgeformte Leitelemente sind denkbar.

Der Übergangsbereich von der Zuleitung zu der radialen Wand ist eckig, rund oder mittels Freiform ausgebildet, wobei radiale Wandflächen eben, wellig, gelocht, mit Oberflächenstruktur (rau oder mit Borsten) ausgebildet sind. Alternativ ist der Übergangsbereich nach oben oder unten zeigend ausgebildet.

Im Inneren des Radialdiffusors finden ein poröses Medium oder Querschnittsverengungen zur Beeinflussung der Strömung Anwendung. Des Weiteren sind Leitbleche zur Stromführung und Drallerzeugung vorgesehen. Diese Leitbleche sind horizontal auf einer oder mehreren unterschiedlichen Ebenen angeordnet und können wellig, geneigt oder schräg sein, wobei die Leitbleche bereits in der Zuleitung beginnend ausgebildet sein können.

Die Leitbleche können vertikal liegend gerade oder gekrümmt sowie verdreht ausgebildet sein.

Bei der Nutzung von Freiformblechen als Leitblech, können diese gewellt oder gezackt durchgehend oder in Teilabschnitten mit Unterbrechungen in Linie oder versetzt ausgebildet sein.

Eine weitere Ausgestaltung sieht eine Kombination von horizontalen und vertikalen Leitblechen vor.

Die Oberfläche der Leitbleche ist glatt, rau, wellig oder mit Borsten ausgebildet, wobei die Leitbleche zudem unterschiedliche Dicken und Querschnitte aufweisen können.

Weitere Einsätze in dem Radialdiffusor können einzelne oder mehrere Gitter sein. Auch eine spiralförmige Anordnung des Auslasses ist denkbar.

Der Energiespeicher ist vorzugsweise in Form einer Kugel, eines Zylinders, eines Ellipsoids oder eines Quaders ausgebildet oder aus diesen zusammengesetzt, wobei die Grundfläche quadratisch, rechteckig, rund, elliptisch oder ein Polygonzug ist.

Die Außenform des Speichers ist vorzugsweise geradestehend oder liegend, schräg, mittels Freiform oder mittels Verjüngung ausgebildet.

Auch eine Kombination eines kompakten Speichers mit einem schlanken Speicher sowie eine Verschaltung mehrerer Speicher sind möglich.

Der Energiespeicher weist vorzugsweise ebenfalls Leitbleche zur Minderung von Dralleffekten auf, wobei diese entfernt von der Zuführeinrichtung angeordnet sind. Die Leitbleche sind dabei horizontal, vertikal oder schräg am Rand oder davon entfernt angeordnet. Sie sind weiterhin auf Höhe der Zuführeinrichtung, darüber oder darunter, positioniert und durchgehend oder segmentiert als Gitter oder als Lochblech ausgebildet. Auch eine Anordnung ähnlich den Leitblechen des Radialdiffusors ist möglich.

Des Weiteren sind alternative Belademethoden mittels eines radialen Rohrverteilers mit geraden oder ungeraden Nebenstreckungen oder ein tangential zur Speicherwand endendes Verteilerrohr möglich.

Eine weitere Möglichkeit, eine drallbehaftete Strömung zu erzeugen ist ein Schneckenbelader, der entweder in einer Ebene oder über die Höhe variierend ausgebildet ist.

Die Beladung des Energiespeichers von Außen kann mittels eines Rohrverteilsystems direkt an der Decke oder darunter erfolgen, wobei die Öffnung in Richtung Decke oder tangential dazu mit einem porösen Medium oder Leitblechen ausgebildet ist. Alternativ kann eine Beladung von oben mit Umlenkblechen im Speicher oder mittels einer Kombination aus Schichtenlader mit Radialdiffusor erfolgen.

Die Zuleitung ist derart ausgebildet, dass eine oder mehrere gerade Leitungen vertikal oder horizontal in der Mitte oder exzentrisch angeordnet sind.

Die Zuleitungen werden von oben, seitlich oder unten zugeführt und sind in Form einer Helix, gebogen oder ähnlich einer Verzweigung mit gleich- oder unterschiedlich langen Teilstrecken ausgebildet.

Die Außenwand der Zuleitung ist gerade oder gewellt, wobei auch die Zuleitung gerade, verdrillte oder schneckenförmige Leitbleche über den gesamten Querschnitt oder über einen Teil des Querschnitts aufweist.

Auch eine Variante zum Beladen von außen an einer oder mehreren Stellen oder über den gesamten Umfang entlang der Decke des Speichers oder darunter von außen senkrecht, schräg oder tangential zur Speicherwand ist möglich.

Die Trennung eines oder mehrerer Fluide in einem Speicher erfolgt nur über die unterschiedlichen Dichten der Fluide aufgrund unterschiedlicher Temperaturen. Die Trennung beziehungsweise die Schichtung der Fluide erfolgt ohne Wände.

Mit der erfindungsgemäßen Beladung des Energiespeichers ist ein Nutzungsgrad von über 90% realisierbar.

Der Nutzungsgrad bezieht sich auf das entnommene und eingespeiste Volumen bezogen auf die Temperatur.

Die Beladung erfolgt beispielsweise von innen, zum Beispiel aus dem Austritt eines modifizierten Radialdiffusors, durch eine Beladung von außen aus einer Eintrittsfläche am Speicherumfang oder mittels einer lokalen Beladung von außen aus Teilen des Speicherumfangs oder einer Kombination. Anhand der tangentialen Geschwindigkeitsverteilung im Speicher ist für alle drei Möglichkeiten eine zirkulierende Strömung in Form eines Rankine-Wirbels nachgewiesen.

Sowohl die Drallstärke als auch die Methode der Beladung zeigen einen Einfluss auf die Schichtungsqualität. Gegenüber dem dem Stand der Technik einer rein radialen Beladung mit einem konventionellen Radialdiffusor wird ein deutlich höherer Beladungsnutzungsgrad erzielt.

Durch die erfindungsgemäße Vorrichtung ist eine effektive Nutzung des eingeladenen Volumens möglich. Des Weiteren ist eine äquivalente Beladung eines Kältespeichers mit kaltem Wasser von unten möglich.

Die Erfindung wird nachfolgend an einem Ausführungsbeispiel und zugehörigen Zeichnungen näher erläutert.

Es zeigen:
- Figur 1a: eine erste und zweite Phase zum Beladen eines Energiespeichers,
- Figur 1b: eine dritte und vierte Phase zum Beladen eines Energiespeichers,
- Figur 1c: einen Radialdiffusor gemäß dem Stand der Technik,
- Figur 2: einen Radialdiffusor mit Einsätzen zur Drallerzeugung,
- Figur 3: Arten der Beladung eines Energiespeichers von innen und außen,
- Figur 4: ein Leitelement eines Radialdiffusors mit vertikalen Elementen zur Erzeugung einer Strömungsform,
- Figur 5: ein Leitelement eines Radialdiffusors mit vertikalen und horizontalen Elementen zur Erzeugung einer Strömungsform,
- Figur 6: ein Leitelement,
- Figur 7: einen Radialdiffusor mit einer gezackt geformten Außenkante,
- Figur 8: einen Radialdiffusor mit nach oben weisendem Auslass,
- Figur 9: einen Radialdiffusor mit nach unten weisendem Auslass,
- Figur 10: einen Radialdiffusor mit gewellten Wandflächen,
- Figur 11: einen Radialdiffusor mit horizontalem Leitblech,
- Figur 12: einen Radialdiffusor mit parallel angeordneten horizontalen Leitblechen,
- Figur 13: einen Radialdiffusor mit horizontalem gewelltem Leitblech,
- Figur 14: einen Radialdiffusor mit in der Zuführung beginnenden Leitelementen,
- Figur 15: parallel liegende Leitelemente in der Zuführung beginnend,
- Figur 16: einen Radialdiffusor mit gekrümmten Leitblechen,
- Figur 17: einen Radialdiffusor mit abgewinkelten Leitelementen,
- Figur 18: einen Radialdiffusor mit diagonal liegenden Leitelementen ,
- Figur 19: einen Radialdiffusor mit diagonal angeordneten Leitelementen,
- Figur 20: einen Radialdiffusor mit Leitelementen mit welliger Oberfläche,
- Figur 21: Leitelemente mit gekrümmten Seitenflächen,
- Figur 22: Leitelemente mit unterschiedlich gekrümmten Seitenflächen,
- Figur 23: Leitelemente mit gekrümmten symmetrischen Seitenflächen,
- Figur 24: einen Energiespeicher mit Mitteln in einer Ebene zur Minderung von Dralleffekten,
- Figur 25: einen Energiespeicher mit Mitteln in einer Ebene zur Minderung von Dralleffekten,
- Figur 26: einen Energiespeicher mit Mitteln in zwei Ebenen zur Minderung von Dralleffekten,
- Figur 27: Leitbleche zur Drallerzeugung entfernt vom Belader,
- Figur 28: einen Rohrverteiler mit tangentialem Auslass,
- Figur 29: mehrere Radialdiffusoren in Stapelanordnung,
- Figur 30: die Beladung eines Energiespeichers von oben,
- Figur 31: die Beladung eines Energiespeichers von außen über den gesamten Umfang.

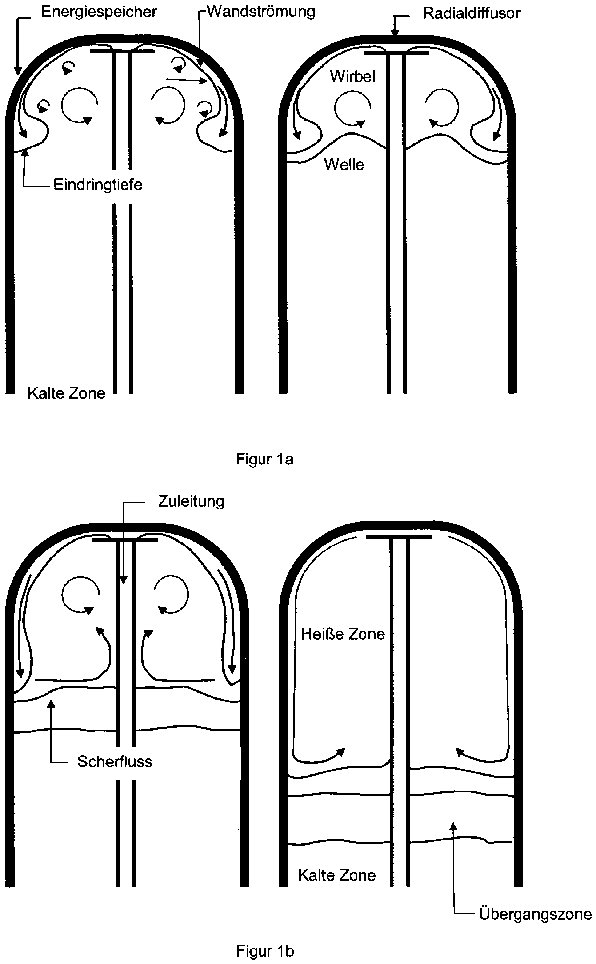

In den Figuren 1a und 1b ist die Beladung eines Energiespeichers mit Heiß-/Warmwasser nach dem Stand der Technik in vier Phasen dargestellt. Die Beladung des Energiespeichers erfolgt mittels einer zentrischen Zuführeinrichtung, die im oberen Bereich des Energiespeichers angeordnet ist derart, dass bei Zuführung eines Fluids eine Schichtung mit unterschiedlichen Dichten aufgrund unterschiedlicher Temperaturen erfolgt. Durch die starke Einströmung entstehen starke Verwirbelungen, die zu einer Vermischung des Fluids führen. Die entstehende Schichtung des Energiespeichers ist in der Figur 1b beschrieben.

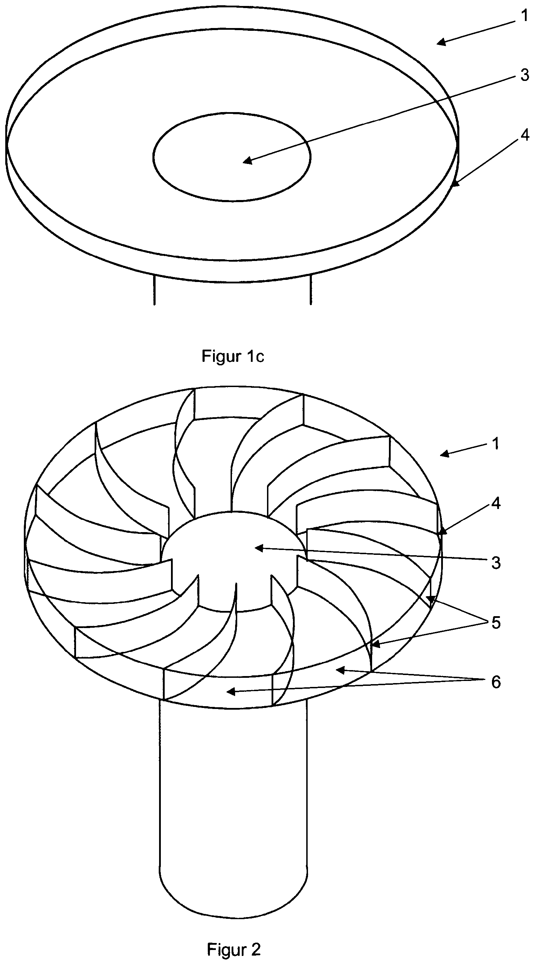

Die Beladung erfolgt vorzugsweise mittels einer Zuführeinrichtung in Form eines Radialdiffusors. In Figur 1c ist eine Zuführeinrichtung 1 in Form eines Radialdiffusors zum Be- und Entladen eines thermischen Energiespeichers gemäß dem Stand der Technik dargestellt. Der Radialdiffusor 1 ist in der Regel koaxial im Inneren des Energiespeichers 2 angeordnet, wobei über eine Zuleitung 3 ein Fluid als Speichermedium zuführbar ist derart, dass das Fluid durch einen umlaufenden, von dem Radialdiffusor 1 gebildeten, Radialdiffusorspalt 4 austritt.

Figur 2 zeigt einen erfindungsgemäßen Radialdiffusor, wobei der Radialdiffusor 1 in seinem Inneren im Radialdiffusorspalt 4 angeordnete Leitelemente 5 aufweist, wobei der Radialdiffusorspalt 4 mit den Leitelementen 5 einzelne Auslässe 6 bildet. Die Leitelemente 5 sind vorzugsweise in Form von Leitblechen beziehungsweise Leitschaufeln ausgebildet, die den Strömungsverlauf in radialer und/oder tangentialer Richtung beeinflussen. Diese können bogenförmig gekrümmt, oder als Freiform ausgeführt sein und sich über den gesamten Radialdiffusor 1 beziehungsweise dessen Durchmesser, wie in Figur 2 dargestellt, oder nur einen Teil davon erstrecken. Vorzugsweise erstrecken sich die bogenförmigen Leitelemente 5 vom Inneren des Radialdiffusors 1 im Bereich der Zuleitung 3 nach außen in den Radialdiffusorspalt 4.

Der Querschnitt der Leitelemente 5 ist rechteckig oder profiliert, zudem sind begrenzende Kanten gerade, gewellt oder gezackt.

Die Leitelemente 5 beeinflussen den Strömungsverlauf in radialer und tangentialer Richtung, wobei durch die Richtungsbeeinflussung dreidimensionale Wirbelstrukturen entstehen, die im Radialdiffusor 1 eine Vergleichmäßigung bzw. Homogenisierung des Strömungsprofils bewirken.

Dies führt zu einem Abbau einer hohen Radialgeschwindigkeit, wobei mittels der Leitelemente 5 eine Drallerzeugung entsteht.

In einer alternativen Ausgestaltung muss die Erzeugung einer drallbehafteten Strömung im Speicher nicht zwingend durch den Radialdiffusor, d. h. von innen erfolgen. Auch eine Drallerzeugung von außen oder eine Kombination verschiedener Maßnahmen, bspw. mit lokaler tangentialer Einströmung entlang der Speicherwand ist gleichwertig.

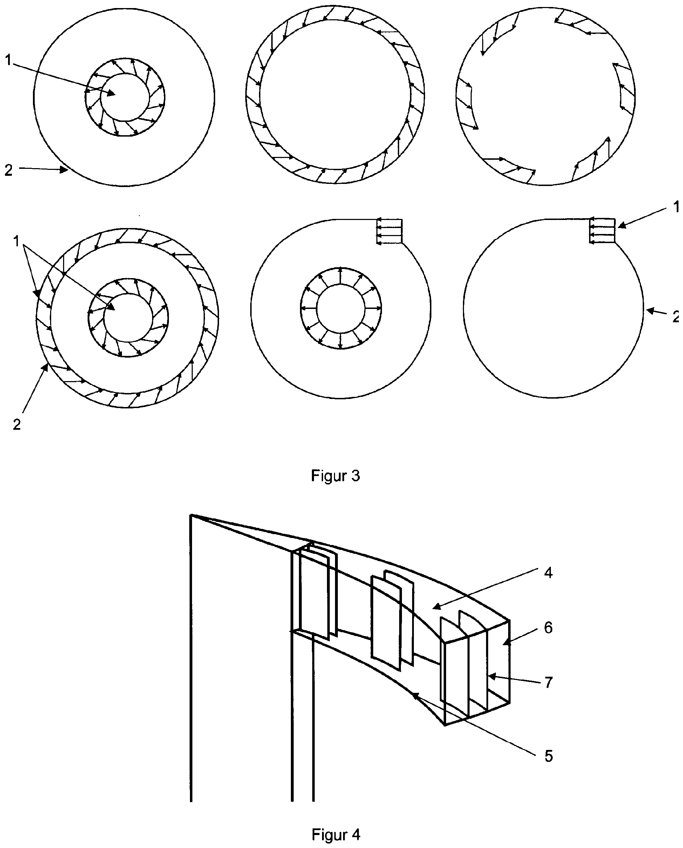

Derartige Maßnahmen zur Drallerzeugung von innen und außen sind in der Figur 3 dargestellt. Die erzeugte Strömung wird hier mittels Vektoren dargestellt. Demnach kann eine Drallerzeugung von innen, beispielsweise mittels eines Radialdiffusors 1 oder von außen mittels umlaufender oder lokaler Zuführeinrichtungen 1 erfolgen. Die Zuführeinrichtung 1 weist einen Drallwinkel in Bezug auf die Senkrechte der Zuführeinrichtung 1 auf.

Auch eine Kombination einer inneren und äußeren Zuführung mittels einer im Inneren oder Äußeren angeordnete Zuführeinrichtung 1 ist möglich, wobei vorteilhafterweise die Zuführeinrichtungen einen gegenläufigen drallbehafteten Strömungsverlauf aufweisen.

In einer alternativen Ausgestaltung kann die Zuführeinrichtung 1 in Form einer lokalen tangentialen Einströmung entlang der Speicherwand 2 ausgebildet sein. Eine Kombination einer tangentialen Einströmung entlang der Speicherwand 2 mit einer radialen Einströmung von innen ist ebenfalls möglich.

In einer vorteilhaften Ausgestaltung weist die Vorrichtung Elemente 7 auf, welche eine definierte Strömungsform erzeugen. Derartige Elemente 7 sind in den Figuren 4 bis 8 dargestellt. Die Elemente 7 können dabei stationär oder einstellbar ausgebildet sein.

In Figur 4 wird ein Ausschnitt einer vertikalen Anordnung des Elements 7 dargestellt, wobei das Element 7 in einem Radialdiffusor paarweise im Bereich des Auslasses 6 in dem Radialdiffusorspalt 4 dreireihig angeordnet ist.

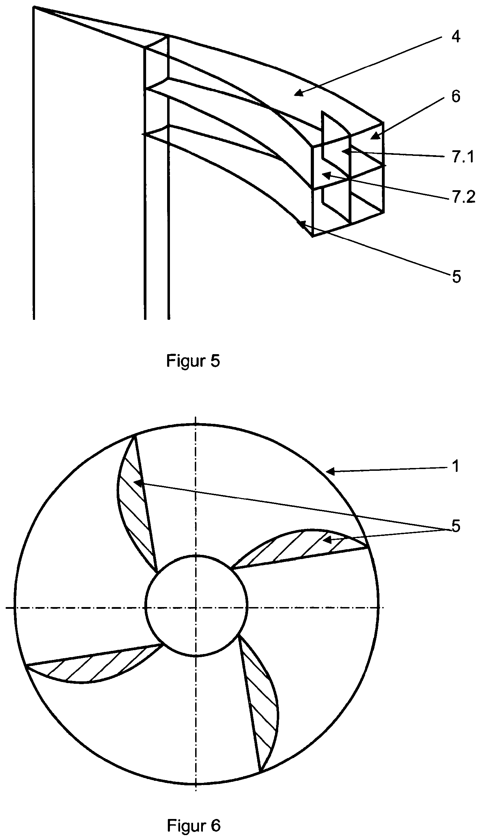

Eine weitere alternative Ausgestaltung einer Anordnung im Radialdiffusorspalt ist in Figur 5 dargestellt. Figur 5 zeigt eine Kombination aus einem vertikalen Element 7.1 und einem horizontalen Element 7.2, wobei das horizontale Element 7.2 in Form einer durchgehenden Führung ausgebildet ist. Mittels der Elemente 7.1, 7.2 kann eine definierte Strömungsform erzeugt werden, wobei die Strömung eine Drallströmung darstellt.

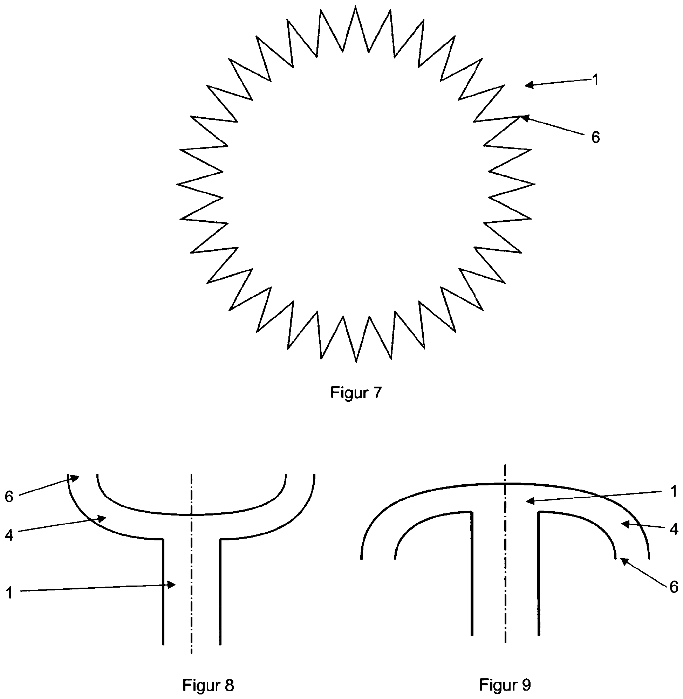

In den Figuren 6 und 7 sind weitere Ausgestaltungen des Leitelements 5 dargestellt, ohne auf diese begrenzt zu sein.

Figur 6 zeigt eine Ausgestaltung der Leitelemente 5, wobei die Leitelemente 5 einen variierenden Querschnitt aufweisen. Die Oberfläche der Leitelemente 5 kann sowohl rau als auch wellig, glatt oder mit Borsten ausgebildet sein.

In Figur 7 ist eine Draufsicht eines Radialdiffusors 1 dargestellt. Der Radialdiffusor 1 weist eine gezackt geformte Außenkante auf, in der der Auslass 6 umfangsseitig angeordnet ist.

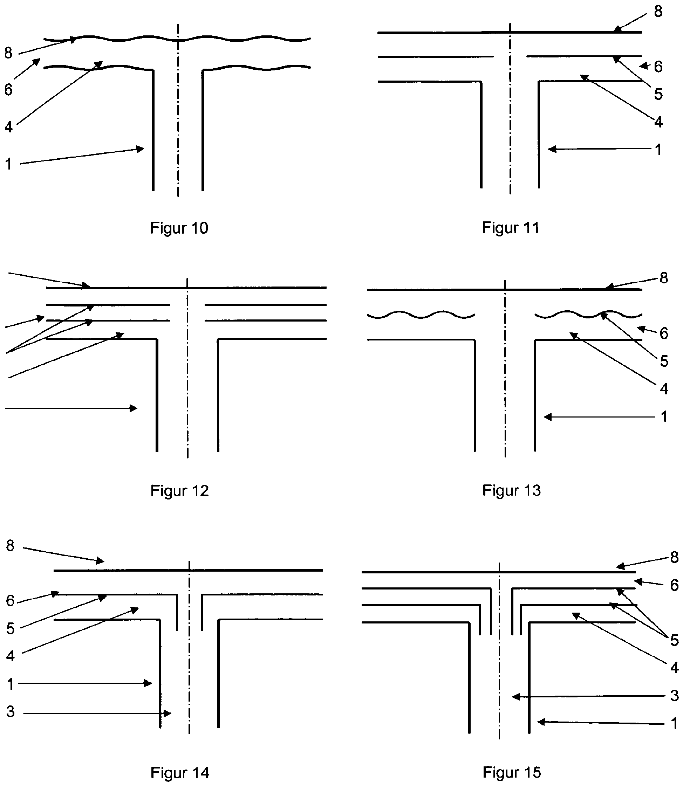

Die Figuren 8 und 9 zeigen zwei weitere beispielhafte Ausgestaltungen eines Radialdiffusors 1, wobei der Radialdiffusorspalt 4 einen nach oben weisenden Auslass 6 (Figur 9) oder nach unten weisenden Auslass 6 (Figur 10) besitzt.

Die Figuren 10 bis 19 zeigen Ausgestaltungen eines im Inneren des Energiespeichers befindlichen Radialdiffusors 1, wobei der Radialdiffusorspalt 4 mit seinem Auslass 6 radial nach außen in Richtung der Innenwand des Energiespeichers weist.

Gemäß Figur 10 sind die radialen Wandflächen 8 wellig ausgebildet.

Die Figuren 11 bis 19 zeigen die Verwendung von in dem Radialdiffusorspalt 4 angeordneten Leitelementen 5. Die Leitelemente 5 sind gemäß den Figuren 11 bis 13 horizontal parallel zu den Wandflächen 8 liegend angeordnet, wobei das Leitelement 5 gemäß Figur 11 einfach oder wie in Figur 12 dargestellt doppelt parallel zu den Wandflächen 8 ausgebildet ist.

Das Leitelement 5 kann zudem gemäß Figur 11 und 12 glatt oder, wie in Figur 13 dargestellt wellig ausgestaltet sein.

Eine weitere Ausgestaltung der Leitbleche 5 ist in den Figuren 14, 15 und 16 dargestellt. Das eingesetzte Leitelement 5 ist gemäß Figur 14 derart ausgebildet, dass es bereits in der Zuleitung 3 des Radialdiffusors 1 beginnend und sich in Richtung des Auslasses 6 erstreckend ausgebildet ist.

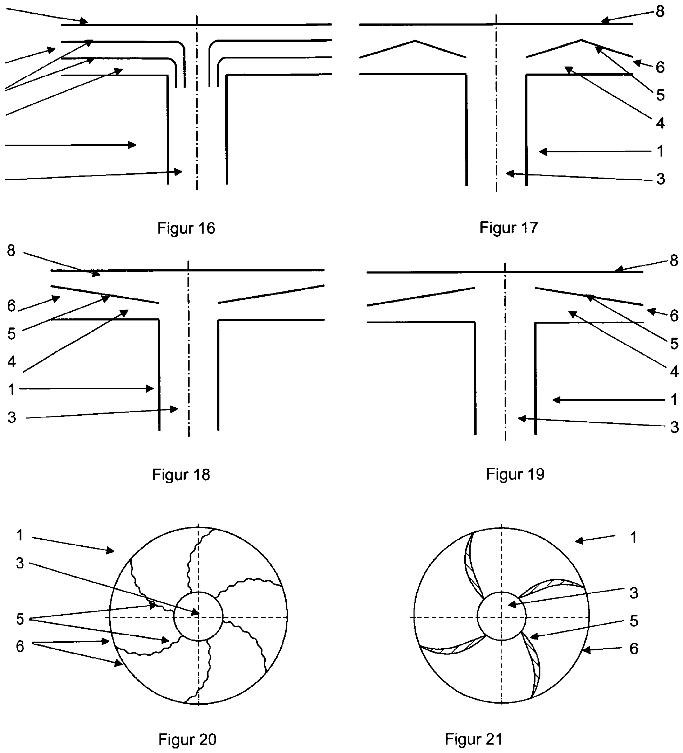

Weitere Ausgestaltungen sind in den Figuren 15 und 16 dargestellt, wobei zwei parallel übereinander angeordnete Leitelemente 5 Anwendung finden. Der Übergang zwischen dem vertikalen und horizontalen Abschnitt des Leitelements 5 kann dabei mittels einer Ecke, wie in Figur 15 dargestellt, oder abgerundet, wie in Figur 16 dargestellt, ausgebildet sein.

Die Figuren 17, 18 und 19 zeigen weitere Anordnungen und Ausgestaltungen von Leitelementen 5 in einem Radialdiffusor, ohne auf diese beschränkt zu sein.

Eine besondere Ausgestaltung von vertikal stehenden Leitelementen 5 in einem Radialdiffusor 1 sind in den Figuren 20 bis 23 dargestellt. Die Leitelemente 5 sind erstrecken sich von der Zuleitung 3 in Richtung des umfangsseitigen Auslasses 6. Gemäß der Figur 20 können die verwendeten Leitelemente 5 eine raue, wellige oder mit Borsten versehene Oberfläche aufweisen.

Gemäß den Figuren 21 bis 23 sind die Leitelemente 5 derart ausgebildet, dass die Leitelemente 5 unterschiedliche Dicken und Querschnitte aufweisen können. Die Querschnitte können dabei geometrischen Körpern oder einer Freiform entsprechen.

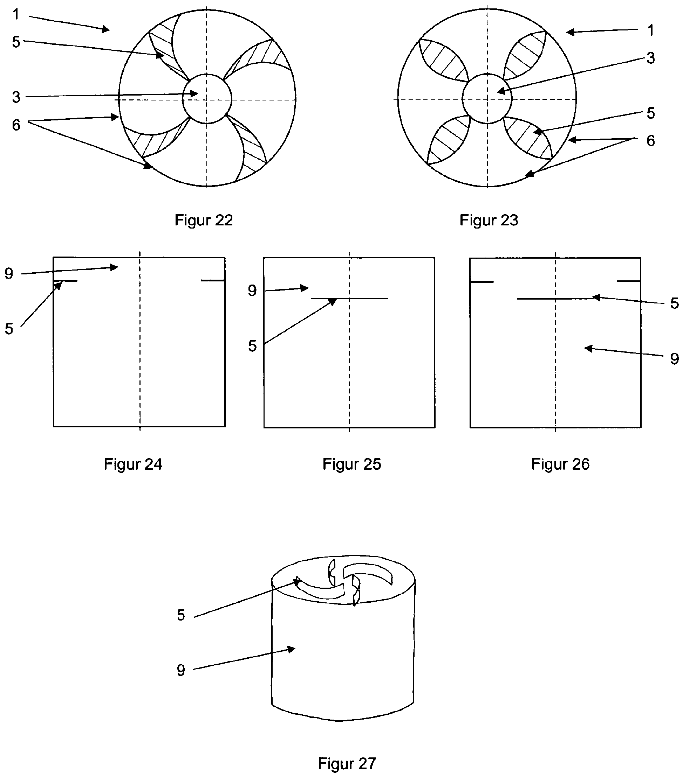

Die Figuren 24, 25 und 26 zeigen einen Energiespeicher 9, wobei ein nicht dargestellte Radialdiffusor Mittel zur Drallerzeugung aufweist. Die drallbehaftete Strömung verbessert den Aufbau der thermischen Schichtung im Energiespeicher 9 und wirkt daher vorzugsweise nur auf Höhe des Radialdiffusors. Um zu gewährleisten, dass sich die drallbehaftete Strömung auf den oberen Energiespeicherbereich beschränkt, verfügt dieser vorzugsweise über Leitelemente 5 oder auch Stromstörer, die eine Minderung von Dralleffekten entfernt vom Radialdiffusor bewirken. Die Leitelemente 5 sind insbesondere umfangsseitig an der Innenwand des Energiespeichers 9 als Grenze zwischen dem oberen und dem unteren Energiespeicherbereich angeordnet.

Figur 27 verdeutlicht Einbauten in dem Energiespeicher 9 in Form von Leitelementen 5 zur Drallerzeugung entfernt von dem hier nicht dargestellten Radialdiffusor. Die Beladung kann dabei über einen mittig angeordneten Radialdiffusor ohne Leitbleche erfolgen, wobei auch eine Beladung von außen denkbar ist.

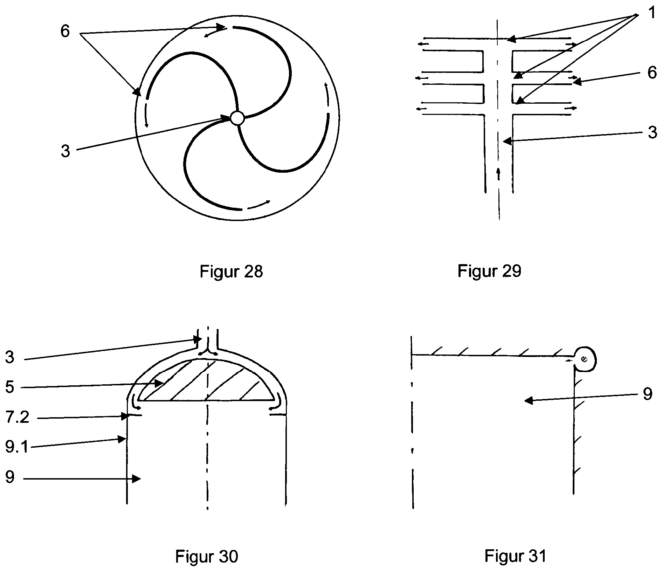

Figur 28 zeigt einen weiteren Rohrverteiler, wobei die Auslässe 6 tangential zur Wandfläche des Speichers angeordnet sind

Figur 29 zeigt eine Ausgestaltung einer Zuführeinrichtung 1 in Form von mehreren in einer Gruppe übereinander angeordneten Radialdiffusoren. Die Radialdiffusoren 1 sind vorzugsweise koaxial zueinander beabstandet in einem Energiespeicher angeordnet. In einer vorteilhaften Ausgestaltung sind zur gleichmäßigen Aufteilung des Speichermediums über die verschiedenen Auslassebenen mit zugehörigen Auslässen 6 die Radialdiffusoren 1 mit Leitblechen kombiniert.

Die Figur 30 zeigt eine Beladung des Energiespeichers von oben. Die Zuleitung 3 ist koaxial zum Energiespeicher angeordnet und führt das Speichermedium von oben in diesen hinein. Zur Erzeugung einer drallbehafteten Strömung sind Leitelemente 5 zur Umlenkung in dem Energiespeicher 9 derart angeordnet, dass das Speichermedium mittels eines glockenförmigen Leitelements 5 an der Behälterwand entlang in den Energiespeicher 9 strömt. Das Leitelement 5 ist parallel zu den Wandflächen des Energiespeichers 9 angeordnet und erstreckt sich bis in den axialen Teil der Wandflächen 9.1 des Energiespeichers 9. Vorteilhafterweise weist Wandfläche 9.1 im Endbereich des Leitelements 5 ein umlaufendes horizontales Element 7.2 auf, welches das Speichermedium von der Speicherwand in das Zentrum des Energiespeichers 9 umlenkt.

Figur 31 verdeutlicht eine Variante zum Beladen des Energiespeichers 9 von außen. Das Einströmen des Speichermediums in den Energiespeicher erfolgt über den gesamten Umfang und vorzugsweise entlang der Decke des Energiespeichers 9.

Die Vorrichtung zum Be-/ und Entladen von Energiespeichern findet insbesondere Anwendung in Verdrängungspeichern in Form von Wärme- und Kältespeichern, Energiespeichern mit konstantem oder variablem Volumen sowie bei Speichern mit unterschiedlichen Füllhöhen.

Typischerweise erfolgt die Beladung eines Verdrängungsspeichers in Form eines Wärmespeichers von oben, sodass sich die warme Zone im oberen Bereich des Speichers ergibt. Die Entladung erfolgt ebenfalls von oben, vorzugsweise über die Zuführeinrichtung, wobei diese für die Entladung in Form einer Ansaugung/Entnahme agiert. Das kalte Fluid wird dann unten jeweils über eine gleichartige Zuführeinrichtung entnommen bzw. eingespeist.

Im Falle eines Verdrängungsspeichers in Form eines Kältespeichers erfolgen Beladung mit kaltem Fluid und Entladung im unteren Bereich, sodass sich eine kalte Zone im Bodenbereich des Speichers ergibt. Auch hier können Zuführung und Ansaugung/Entnahme des Fluids über die Zuführeinrichtung erfolgen. Das warme Fluid wird dann oben jeweils über eine gleichartige Zuführeinrichtung entnommen bzw. eingespeist.

### Bezugszeichenliste

- 1: Zuführeinrichtung/Radialdiffusor
- 2: Energiespeicher
- 3: Zuleitung
- 4: Radialdiffusorspalt
- 5: Leitelement
- 6: Auslass
- 7: Element zur Erzeugung einer Strömungsform
- 7.1: Vertikales Element
- 7.2: Horizontales Element
- 8: Radiale Wandfläche
- 9: Energiespeicher

## Patentansprüche

1. Vorrichtung zum Be- und/oder Entladen eines thermischen Energiespeichers, wobei der thermische Energiespeicher (2) eine Speicherwand aufweist und mittels einer Zuführeinrichtung (1) mit mindestens einem Fluid als Speichermedium beladbar ist, **dadurch gekennzeichnet, dass** die Zuführeinrichtung (1) wenigstens zwei oder mehrere bogenförmig radial nach außen weisende Leitelemente (5) zur Erzeugung einer drallbehafteten Strömung aufweist und/oder dass an die Zuführeinrichtung (1) zwei oder mehrere bogenförmig radial nach außen weisende Leitelemente (5) anschließen, die den Strömungsverlauf in radialer Richtung beeinflussen.

2. Energiespeicher mit einer Vorrichtung nach Anspruch 1, **dadurch gekennzeichnet, dass** der Energiespeicher (2) wenigstens eine Anordnung zur Erzeugung einer drallbehafteten Strömung aufweist derart, dass die Zuführeinrichtung (1) tangential zu der Speicherwand angeordnet ist und den Strömungsverlauf in tangentialer Richtung beeinflusst.

3. Energiespeicher mit einer Vorrichtung nach Anspruch 1 oder 2, **dadurch gekennzeichnet, dass** der Energiespeicher (2) mittels einer innenliegenden, sich koaxial zum Speicher erstreckenden Zuführeinrichtung (1) und/oder einer an der Speicherwand umlaufend oder zumindest bereichsweise ausgebildeten Zuführeinrichtung (1) beladbar ist.

4. Vorrichtung nach einem der Ansprüche 1 bis 3, **dadurch gekennzeichnet, dass** die Zuführeinrichtung (1) und/oder eine Entnahmeeinrichtung einen um einen Drallwinkel zu der Senkrechten der Speicherwand gedrehten Auslass (6) aufweist und/oder dass die Zuführeinrichtung (1) einen lokalen Auslass (6) in tangentialer Richtung entlang der Speicherwand und/oder in radialer Richtung in den thermischen Energiespeicher (2) aufweist.

5. Vorrichtung nach einem der Ansprüche 1 bis 4, **dadurch gekennzeichnet, dass** die Zuführeinrichtung (1) in Form eines im Inneren des Energiespeichers (2) angeordneten Radialdiffusors (1) ausgebildet ist, wobei der Radialdiffusor (1) wenigstens ein Leitelement (5) in Form eines Leitbleches oder einer Leitschaufel aufweist, wobei das Leitelement (5) gekrümmt oder als Freiform ausgebildet ist und sich bereichsweise oder vollständig über den Radialdiffusor (1) erstreckt.

6. Vorrichtung nach einem der Ansprüche 1 bis 5, **dadurch gekennzeichnet, dass** die Zuführeinrichtung (1) einstellbare und/oder steuerbare Elemente (7) zur Erzeugung definierter Strömungsformen aufweist.

7. Kältespeicher mit einer Vorrichtung für die Beladung eines Kältespeichers nach Anspruch 1, **dadurch gekennzeichnet, dass** der Kältespeicher mit kaltem Wasser von unten beladbar ist.

8. Vorrichtung nach Anspruch 1, **dadurch gekennzeichnet, dass** mittels der Zuführeinrichtung (1) das Fluid ansaugbar/entnehmbar ist.

9. Verfahren zum Be- und/oder Entladen eines thermischen Energiespeichers, wobei der thermische Energiespeicher (2) mittels einer Zuführeinrichtung (1) mit mindestens einem Fluid als Speichermedium beladen wird, wobei der Strömungsverlauf des durch die Zuführung (1) in den Energiespeicher (2) einströmenden Fluids radial und/oder tangential beeinflusst wird derart, dass eine drallbehaftete Strömung und eine vorteilhafte Geschwindigkeitsverteilung mit wenig Vermischung des Strömungsprofils in dem Energiespeicher (2) wirken, **dadurch gekennzeichnet, dass** mittels wenigstens zwei oder mehrerer bogenförmig radial nach außen weisender Leitelemente (5) die drallbehaftete Strömung radial erzeugt wird.

10. Verfahren nach Anspruch 9, **dadurch gekennzeichnet, dass** die Zuführung (1) zusätzlich tangential zu der Speicherwand erfolgt und den Strömungsverlauf in tangentialer Richtung beeinflusst.

11. Verfahren nach Anspruch 9 oder 10, **dadurch gekennzeichnet, dass** der Energiespeicher (2) mittels einer zentrisch angeordneten Drallströmung und/oder einer von der Speicherwand ins Innere strömenden Drallströmung beladen wird.

12. Verfahren nach einem der Ansprüche 9 bis 11, **dadurch gekennzeichnet, dass** das Fluid in tangentialer Richtung entlang der Speicherwand und/oder in radialer Richtung in den thermischen Energiespeicher (2) einströmt.

13. Verfahren nach einem der Ansprüche 9 bis 12, **dadurch gekennzeichnet, dass** von der Zuführung zum Austritt des Fluids in dem thermischen Energiespeicher (2) ein homogeneres Geschwindigkeitsprofil erzeugt wird.

14. Verfahren nach einem der Ansprüche 9 und 13, **dadurch gekennzeichnet, dass** mittels der drallbehafteten Strömung des einströmenden Fluids mit einer ersten Temperatur T₁ nur eine geringe Vermischung mit dem in dem Energiespeicher (2) befindlichen Fluid mit einer zweiten Temperatur T₂ erfolgt.

## Claims

1. Device for charging and/or discharging a thermal energy store, wherein the thermal energy store (2) has a store wall and is loadable with at least one fluid as a storage medium by means of a feed device (1), **characterized in that** the feed device (1) has at least two or more guide elements (5) facing radially outwards in an arc for generating a swirling flow and/or **in that** two or more guide elements (5) facing radially outwards in an arc adjoin the feed device (1) and influence the flow course in the radial direction.

2. Energy store having a device according to claim 1, **characterized in that** the energy store (2) has at least one arrangement for generating a swirling flow in such a way that the feed device (1) is arranged tangentially to the store wall and influences the flow course in the tangential direction.

3. Energy store having a device according to claim 1 or 2, **characterized in that** the energy store (2) can be loaded by means of an internal feed device (1) extending coaxially to the store and/or a feed device (1) formed circumferentially or at least in sections on the store wall.

4. Device according to one of claims 1 to 3, **characterized in that** the feed device (1) and/or a removal device has an outlet (6) rotated through a swirl angle to the perpendicular of the store wall and/or **in that** the feed device (1) has a local outlet (6) in tangential direction along the store wall and/or in radial direction into the thermal energy store (2).

5. Device according to one of claims 1 to 4, **characterized in that** the feed device (1) is designed in the form of a radial diffuser (1) arranged in the interior of the energy store (2), wherein the radial diffuser (1) has at least one guide element (5) in the form of a guide plate or a guide vane, wherein the guide element (5) is curved or designed as a free form and extends in sections or completely over the radial diffuser (1).

6. Device according to one of claims 1 to 5, **characterized in that** the feed device (1) has adjustable and/or controllable elements (7) for generating defined flow shapes.

7. Cold accumulator having a device for loading a cold accumulator according to claim 1, **characterized in that** the cold accumulator can be loaded with cold water from below.

8. Device according to claim 1, **characterized in that** the fluid can be sucked in/removed by means of the feed device (1).

9. Method for charging and/or discharging a thermal energy store, wherein the thermal energy store (2) is charged with at least one fluid as storage medium by means of a feed device (1), wherein the flow course of the fluid flowing into the energy store (2) through the feed device (1) is influenced radially and/or tangentially in such a way that a swirling flow and an advantageous velocity distribution with little mixing of the flow profile act in the energy store (2), **characterized in that** the swirling flow is generated radially by means of at least two or more guide elements (5) facing radially outwards in an arcuate manner.

10. Method according to claim 9, **characterized in that** the feed (1) additionally takes place tangentially to the store wall and influences the flow course in the tangential direction.

11. Method according to claim 9 or 10, **characterized in that** the energy store (2) is loaded by means of a centrally arranged swirling flow and/or a swirling flow flowing from the store wall into the interior.

12. Method according to one of claims 9 to 11, **characterized in that** the fluid flows into the thermal energy store (2) in a tangential direction along the store wall and/or in a radial direction.

13. Method according to one of claims 9 to 12, **characterized in that** a more homogeneous velocity profile is generated from the supply to the outlet of the fluid in the thermal energy store (2).

14. Method according to one of the claims 9 and 13, **characterized in that** by means of the swirling flow of the inflowing fluid with a first temperature T₁ only a slight mixing with the fluid with a second temperature T₂ located in the energy store (2) takes place.

## Revendications

1. Dispositif pour charger et/ou décharger un accumulateur d'énergie thermique, dans lequel l'accumulateur d'énergie thermique (2) présente une paroi d'accumulation et peut être chargé au moyen d'une installation d'alimentation (1) avec au moins un fluide servant de matériau de stockage thermique, **caractérisé en ce que** l'installation d'alimentation (1) comporte au moins deux ou plusieurs éléments de guidage (5) orientés vers l'extérieur dans le sens radial en arc de cercle et destinés à produire un écoulement giratoire, et/ou **en ce que** deux ou plusieurs éléments de guidage (5) orientés vers l'extérieur dans le sens radial en arc de cercle, qui influent sur l'écoulement dans le sens radial, font suite à l'installation d'alimentation (1).

2. Accumulateur d'énergie muni d'un dispositif selon la revendication 1, **caractérisé en ce que** l'accumulateur d'énergie (2) comporte au moins une disposition pour produire un écoulement giratoire, en cela que l'installation d'alimentation (1) est disposée de façon tangente de la paroi d'accumulation et influe sur l'écoulement dans le sens tangent.

3. Accumulateur d'énergie muni d'un dispositif selon la revendication 1 ou 2, **caractérisé en ce que** l'accumulateur d'énergie (2) peut être chargé au moyen d'une installation d'alimentation (1) placée à l'intérieur et qui s'étend de façon coaxiale de l'accumulateur, et/ou d'une installation d'alimentation (1) formée sur la paroi d'accumulation sur tout le tour ou au moins par zones.

4. Dispositif selon l'une des revendications 1 à 3, **caractérisé en ce que** l'installation d'alimentation (1) et/ou une installation de prélèvement présentent une évacuation (6) tournée d'un angle de giration par rapport à la verticale de la paroi d'accumulation et/ou **en ce que** l'installation d'alimentation (1) comporte une évacuation (6) locale dans le sens tangentiel le long de la paroi d'accumulation et/ou dans le sens radial dans l'accumulateur d'énergie thermique (2).

5. Dispositif selon l'une des revendications 1 à 4, **caractérisé en ce que** l'installation d'alimentation (1) est conçue sous la forme d'un diffuseur radial (1) disposé à l'intérieur de l'accumulateur d'énergie (2), lequel diffuseur radial (1) comporte au moins un élément de guidage (5) sous la forme d'une tôle de guidage ou d'une pale de guidage, l'élément de guidage (5) étant incurvé ou de forme libre et s'étendant en partie ou complètement par-dessus le diffuseur radial (1).

6. Dispositif selon l'une des revendications 1 à 5, **caractérisé en ce que** l'installation d'alimentation (1) comporte des éléments réglables et/ou contrôlables (7) destinés à produire des formes d'écoulement définies.

7. Accumulateur de froid muni d'un dispositif pour le chargement d'un accumulateur de froid selon la revendication 1, **caractérisé en ce que** l'accumulateur de froid peut être chargé avec de l'eau froide par le bas.

8. Dispositif selon la revendication 1, **caractérisé en ce que** le fluide peut être aspiré/prélevé au moyen de l'installation d'alimentation (1).

9. Procédé pour le chargement et/ou le déchargement d'un accumulateur d'énergie thermique, dans lequel l'accumulateur d'énergie thermique (2) est chargé au moyen d'une installation d'alimentation (1) avec au moins un fluide servant de matériau de stockage thermique, dans lequel l'écoulement du fluide entrant par l'alimentation (1) dans l'accumulateur d'énergie (2) est influencé dans le sens radial et/ou tangent de telle façon qu'un écoulement giratoire et une répartition de la vitesse avantageuse, avec peu de mélange du profil d'écoulement, se créent dans l'accumulateur d'énergie (2), **caractérisé en ce que** l'écoulement giratoire est produit dans le sens radial au moyen d'au moins deux ou plusieurs éléments de guidage (5) orientés vers l'extérieur dans le sens radial en arc de cercle.

10. Procédé selon la revendication 9, **caractérisé en ce que** l'alimentation (1) s'effectue en outre dans le sens tangent de la paroi d'accumulation et influe sur l'écoulement dans le sens tangent.

11. Procédé selon la revendication 9 ou 10, **caractérisé en ce que** l'accumulateur d'énergie (2) est chargé au moyen d'un écoulement giratoire disposé au centre et/ou d'un écoulement giratoire circulant de la paroi d'accumulation vers l'intérieur.

12. Procédé selon l'une des revendications 9 à 11, **caractérisé en ce que** le fluide entre dans l'accumulateur d'énergie thermique (2) dans le sens tangent le long de la paroi d'accumulation et/ou dans le sens radial.

13. Procédé selon l'une des revendications 9 à 12, **caractérisé en ce qu'**un profil de vitesse homogène est créé de l'alimentation à la sortie du fluide dans l'accumulateur d'énergie thermique (2).

14. Procédé selon l'une des revendications 9 et 13, **caractérisé en ce que** l'écoulement giratoire du fluide entrant à une première température T₁ ne réalise qu'un faible mélange avec le fluide qui se trouve dans l'accumulateur d'énergie (2) à une deuxième température T₂.
